# EUROPÄISCHE PATENTANMELDUNG

(11) **EP 4 786 317 A1**
(43) Veröffentlichungstag der Anmeldung: **05.08.2026**
(21) Anmeldenummer: 26155981.9
(22) Anmeldetag: 03.02.2026
(51) Int. Cl.: B62J 1/00, B62J 1/26

(54) **VERFAHREN ZUR HERSTELLUNG EINES FAHRRADSATTELS UND FAHRRADSATTEL**

(30) Priorität: 03.02.2025 DE 102025103774
(71) Anmelder: Ergon International GmbH, 56070 Koblenz (DE)
(72) Erfinder: Krause, Andreas, 56068 Koblenz (DE); Haas, Sebastian, 56346 Lykershausen (DE); Paasch, David, 56581 Ehlscheid (DE)
(74) Vertreter: dompatent

(57) **Zusammenfassung**

Die Erfindung betrifft ein Verfahren zur Herstellung eines Fahrradsattels (10), mit den Schritten: - Bereitstellen einer Form, - Einlegen mehrere Polsterschichten (42, 44, 46, 47, 48) in die Form, wobei die Polsterschichten (42, 44, 46, 47, 48) unterschiedliche Materialeigenschaften aufweisen, - Verbinden, bspw. Laminieren, der mehreren Polsterschichten (42, 44, 46, 47, 48) zum Ausbilden eines Sattelpolsters (26) des herzustellenden Fahrradsattels. Ferner betrifft die Erfindung einen Fahrradsattel (10).

## Beschreibung

Die Erfindung betrifft ein Verfahren zur Herstellung eines Fahrradsattels und einen Fahrradsattel.

Fahrradsättel weisen eine Sattelschale auf, deren Unterseite generell mit einem Sattelgestell verbunden ist. Auf der Oberseite der Sattelschale ist ein Sattelpolster angeordnet.

Einige Sattelpolster sind aus aufgeschäumtem Material wie PU-Schaum hergestellt. Die Sattelpolster sind auf die Oberseite der Sattelschale aufgeklebt. Derartige, insbesondere geschäumte Sattelpolster weisen gute Dämpfungseigenschaften auf.

Allerdings kann insbesondere bei längeren Fahrten ein derartiges Zusammendrücken des Polsters erfolgen, dass insbesondere die Sitzknochen des Benutzers auf die Oberseite der Sattelschale drücken, so dass Druckstellen entstehen. Dies liegt darin begründet, dass der sogenannte Rebound derartiger Sattelpolster gering ist. Es ist daher bekannt, im Sitzbereich, d.h. im hinteren Bereich des Fahrradsattels, in dem die Sitzknochen des Benutzers angeordnet sind, Gelpolster vorzusehen. Derartige mit einem gelatine- oder gelartigen Material gefüllte Einlegeelemente werden in Ausnehmungen des Sattelpolsters eingelegt. Anschließend werden das Sattelpolster sowie die eingelegten Gelelemente mit einem Textilelement oder dergleichen überzogen. Derartige Gelelemente führen nur bedingt zu einer Verbesserung des Sitzkomforts, da durch die Gelelemente die auftretenden Kräfte nur besser verteilt werden. Ferner weisen Gelelemente bzw. Gelpaddings den Nachteil auf, dass diese nicht kompressibel sind, sondern dass Gelmaterial nur verdrängt werden kann. Eine Dämpfung oder gar Rebound-Eigenschaften können durch Gelpaddings nicht erzielt werden.

Zur Optimierung der Rebound-Eigenschaften existieren Sattelpolster, die, insbesondere zusätzliche Polsterelemente, aufweisen. Bspw. können Polsterelemente an einer oder mehrere Stellen in das Sattelpolster eingesetzt werden. Möglich ist es, dass Polsterelemente in Ausnehmungen des, aus z. B. PU-Schaum bestehenden, Sattelpolster eingegeben und dort bspw. verklebt werden.

Bei geläufigen Verfahren zur Herstellung von Fahrradsätteln mit Polsterelementen werden die Polsterelemente zunächst, bspw. aus einem Halbzeug, separiert, insbesondere ausgetrennt. Anschließend kann z. B. ein Fräsen der Polsterelemente zur Anpassung der Außenkontur sowie insbesondere ein Umformen zur Anpassung der Materialeigenschaften, insbesondere der Härte und/oder der Rebound-Eigenschaften, erfolgen. Diese geläufigen Herstellungsverfahren, insbesondere die Erzeugung der Polsterelemente und die Montage der Sattelpolster, sind aufwendig und kostenintensiv.

Aufgabe der Erfindung ist es ein verbessertes Verfahren zur Herstellung eines Fahrradsattels und einen verbesserten Fahrradsattel zu schaffen, wobei insbesondere die Herstellung verbessert ist.

Die Lösung der Aufgaben erfolgt erfindungsgemäß durch Verfahren zur Herstellung eines Fahrradsattels gemäß Anspruch 1 und einen Fahrradsattel gemäß Anspruch 15.

Das erfindungsgemäße Verfahren zur Herstellung eines Fahrradsattels weist den Schritt des Bereitstellens einer Form, insbesondere eines Werkzeugs, zumindest für einen Teil des herzustellenden Fahrradsattels auf. Bei der Form handelt es sich insbesondere um eine Form für einen Teil oder das gesamte Sattelpolster des herzustellenden Fahrradsattels. Vorzugsweise handelt es sich bei der Form um eine, insbesondere heizbare, Pressform. Das Verfahren weist ferner den Schritt des Einlegens mehrere Polsterschichten, auch als Polsterlayer zu bezeichnen, in die Form auf, wobei die Polsterschichten unterschiedliche Materialeigenschaften aufweisen. Die mehreren Polsterschichten, insbesondere alle der mehreren Polsterschichten, weisen vorzugsweise das gleiche Material auf, bestehen insbesondere aus dem gleichen Material. Ferner weist das Verfahren den Schritt des Verbindens, bevorzugt des Fügens, besonders bevorzugt des Laminierens, der mehreren Polsterschichten zum Ausbilden eines Sattelpolsters, insbesondere eines Multilayer-Sattelpolsters, des herzustellenden Fahrradsattels auf. Das Verbinden der mehreren Polsterschichten erfolgt insbesondere klebemittelfrei. Die Polsterschichten bilden insbesondere das Sattelpolster aus. Es ist bevorzugt, dass das Sattelpolster des herzustellenden Fahrradsattels die Polsterschichten aufweist, bevorzugt daraus besteht, besonders bevorzugt ausschließlich daraus besteht. Mehrere oder alle Polsterschichten können insbesondere gleiche oder unterschiedliche Maße, bspw. Breiten, Längen, Dicken und/oder Flächen; und/oder gleiche oder unterschiedliche Dichten, und/oder gleiche oder unterschiedliche Massen; und/oder gleich oder unterschiedliche Formen aufweisen.

Es ist bevorzugt, dass die Polsterschichten EVA (Ethylenvinylacetat) und/oder Zellkautschuk aufweisen. Besonders bevorzugt bestehen die Polsterschichten aus EVA und/oder Zellkautschuk.

Es ist bevorzugt, dass die mehreren Polsterschichten nebeneinander und/oder übereinander angeordnet werden. Bei einer Anordnung der Polsterschichten übereinander ist es bevorzugt, dass die Polsterschichten flächig und sich berührend übereinander angeordnet werden. Bei einer Anordnung der Polsterschichten nebeneinander ist es bevorzugt, dass die Polsterschichten, insbesondere flächig, sich seitlich berührend zueinander angeordnet werden.

Es ist bevorzugt, dass die Polsterschichten unterschiedliche Dämpfungseigenschaften, Härten, Steifigkeiten, Festigkeiten und/oder Rebound-Eigenschaften, aufweisen, und/oder, dass die Polsterschichten unterschiedliche Materialzusammensetzungen, vorzugsweise Zusammensetzungen des EVA oder Zellkautschuks aufweisen. Bevorzugt weisen die Polsterschichten unterschiedliche Materialeigenschaften und/oder Materialzusammensetzungen in mindestens zwei der folgenden Bereiche des Sattelpolsters auf: einem Sitzbereich, einem Zentrumsbereich und einem Nasenbereich. Insbesondere werden beim Einlegen der mehreren Polsterschichten, Polsterschichten mit entsprechend unterschiedlichen Materialeigenschaften in die entsprechenden Bereiche eingelegt und/oder beim Verbinden, bspw. mittels Druckbeaufschlagung, der mehreren Polsterschichten werden, insbesondere durch Änderung der Materialeigenschaften, Polsterschichten mit entsprechend unterschiedlichen Materialeigenschaften in den entsprechenden Bereichen umgesetzt.

Es ist bevorzugt, dass mindestens eine im Sitzbereich des herzustellenden Fahrradsattels vorgesehene Polsterschicht höhere Dämpfungseigenschaften und/oder ein höheres Rebound-Verhalten und/oder eine größere Härte und/oder eine höhere Steifigkeit und/oder eine größere Festigkeit aufweist als zumindest eine, bevorzugt mehrere, besonderes bevorzugt alle Polsterschichten in anderen Bereichen, insbesondere in einem Zentrumsbereich und/oder in einem Nasenbereich des Fahrradsattels. Bei dem Sitzbereich handelt es sich insbesondere um den hinteren Teil des Sattels, der zur Aufnahme der Sitzknochen dient.

Es ist bevorzugt, dass der Schritt des Einlegens der mehreren Polsterschichten aufweist:
- Einlegen mehrere Polsterschichten in einen Sitzbereich des herzustellenden Fahrradsattels zur Ausbildung eines Sitzpolsters, und/oder
- Einlegen mehrere Polsterschichten in einen Zentrumsbereich des herzustellenden Fahrradsattels zur Ausbildung eines Zentrumspolsters, und/oder
- Einlegen mehrere Polsterschichten in einen Nasenbereich des herzustellenden Fahrradsattels zur Ausbildung eines Nasenpolsters.

Bei dem Sitzpolster, dem Zentrumspolster und/oder dem Nasenpolster handelt es sich insbesondere um ein Multilayer-Polster bestehend aus mehreren Polsterschichten. Je Sitzpolster, Zentrumspolster und/oder Nasenpolster sind insbesondere mehrere Polsterschichten nebeneinander und/oder übereinander vorgesehen. Möglich ist es insbesondere, dass zwei oder alle aus Sitzpolster, Zentrumspolster und Nasenpolster mindestens eine Polsterschicht aufweisen, die gleichzeitig in zwei oder allen aus Sitzpolster, Zentrumspolster und Nasenpolster angeordnet sind. Zum Beispiel ist es möglich, dass das Sattelpolster eine, insbesondere mit der Sattelschale direkt verbundene, Basispolsterschicht aufweist, die Teil des Sitzpolsters, des Zentrumspolsters und des Nasenpolsters ist. Andererseits ist es vorzugsweise möglich, dass zwei oder alle aus Sitzpolster, Zentrumspolster und Nasenpolster mindestens eine Polsterschicht aufweisen, die nur in dem jeweiligen Polster vorgesehen ist. Möglich ist es, dass das Zentrumspolster und das Nasenpolster als ein gemeinsames Nasen-Zentrums-Polster oder das Sitzpolster und das Zentrumspolster als ein gemeinsames Sitz-Zentrums-Polster ausgeführt ist, wobei insbesondere dieses gemeinsam ausgeführte Polster aus denselben Polsterschichten besteht. Bevorzugt bilden Sitzpolster, Zentrumspolster und Nasenpolster zusammen das Sattelpolster aus.

Es ist bevorzugt, dass zwei oder alle aus Sitzpolster, Zentrumspolster und Nasenpolster unterschiedliche Materialeigenschaften, insbesondere unterschiedliche Dämpfungseigenschaften, Härten, Steifigkeiten, Festigkeiten und/oder Rebound-Eigenschaften, aufweisen; und/oder unterschiedliche Materialzusammensetzungen, vorzugsweise Zusammensetzungen des EVA oder Zellkautschuks aufweisen. Möglich ist es bspw., dass Zentrumspolster und Nasenpolster die gleiche Materialeigenschaften und/oder Materialzusammensetzungen aufweisen. Die unterschiedlichen Materialeigenschaften und/oder Materialzusammensetzung ergibt sich insbesondere aus der Kombination und/oder der Anzahl der Polsterschichten je Sitzpolster, Zentrumspolster und Nasenpolster. Es ist bevorzugt, dass das Sitzpolster höhere Dämpfungseigenschaften und/oder ein höheres Rebound-Verhalten und/oder eine größere Härte und/oder eine höhere Steifigkeit und/oder eine größere Festigkeit aufweist als das Zentrumspolster und/oder das Nasenpolster.

Es ist bevorzugt, dass das Verfahren den weiteren Schritt des, insbesondere stoffschlüssigen, Verbindens einer Sattelschale des herzustellenden Fahrradsattels mit den mehreren Polsterschichten aufweist. Insbesondere erfolgt ein, vorzugsweise adhäsives und/oder verschmelzendes, Fügen der Sattelschale mit den mehreren Polsterschichten. Zum Beispiel können die mehreren Polsterschichten mit der Sattelschale verklebt werden. Das Verbinden der Sattelschale mit den mehreren Polsterschichten erfolgt insbesondere vor, nach oder während des Verbindens der mehreren Polsterschichten. Besonders bevorzugt erfolgt das Verbinden der Sattelschale mit den mehreren Polsterschichten und das Verbinden der mehreren Polsterschichten in einem einzigen, gemeinsamen Schritt.

Es ist bevorzugt, dass das Verfahren den weiteren Schritt der Temperatureinbringung in die Polsterschichten, insbesondere zum Verbinden, bevorzugt klebemittelfreien Verbinden, und/oder zu einem Umformen der Polsterschichten, aufweist. Die Temperatureinbringung erfolgt insbesondere vor und/oder während des Einlegens der mehreren Polsterschichten in die Form. Alternativ oder zusätzlich erfolgt die Temperatureinbringung insbesondere vor und/oder während des Verbindens der mehreren Polsterschichten. Insbesondere erfolgt das Verbinden der Polsterschichten durch die Temperatureinbringung. Es ist bevorzugt, dass die Temperatureinbringung vor dem Verbinden der Polsterschichten mit der Sattelschale erfolgt, wobei jedoch auch eine gleichzeitige Durchführung, bspw. ein Verbinden der Sattelschale mit den mehreren Polsterschichten durch die Temperatureinbringung möglich ist. Insbesondere erfolgt durch die Temperatureinbringung ein stoffschlüssiges Fügen, bevorzugt ein Laminieren, bspw. ein Verbacken und/oder ein Verschmelzen. Das Verbinden der Polsterschichten und/oder das Verbinden der Sattelschale mit den mehreren Polsterschichten erfolgt insbesondere druckbeaufschlagt. Durch das klebemittelfreie Verbinden ist insbesondere eine sperrschichtfreie Verbindung der mehreren Polsterschichten umgesetzt.

Es ist bevorzugt, dass die Temperatureinbringung zumindest vor dem Einlegen der Polsterschichten in die Form erfolgt. Die Temperatureinbringung erfolgt insbesondere in einem Ofen. Insbesondere erfolgt ein Anordnen der mehreren miteinander zu verbindenden Polsterschichten in dem Ofen, wobei anschließend ein Herausnehmen der Polsterschichten aus dem Ofen und sodann das Einlegen der Polsterschichten in die Form erfolgt. Vorzugsweise erfolgt eine Temperatureinbringung zwischen 80° C bis 200° C, bevorzugt zwischen 100 ° C und 140° C, besonders bevorzugt auf ca. 120° C. Die Temperatureinbringung erfolgt insbesondere über einen Zeitraum von mindestens 3 Minuten. Insbesondere erfolgt eine Temperatureinbringung über einen Zeitraum von 1 bis 5 Minuten, bevorzugt zwischen 2 bis 4 Minuten, besonderes bevorzugt von ca. 3 Minuten je Millimeter der Gesamtdicke der mehreren Polsterschichten, insbesondere der Summe der Dicken der Polsterschichten in einer Höhenrichtung des herzustellenden Sattelpolsters.

Es ist bevorzugt, dass das Verfahren den weiteren Schritt des Druckbeaufschlagens, insbesondere des Pressens, der Polsterschichten, insbesondere zum Verbinden und/oder zu einem Umformen der Polsterschichten, aufweist. Bevorzugt ist es, dass der Schritt des Druckbeaufschlagens nach der Temperatureinbringung erfolgt, sodass die erwärmten Polsterschichten druckbeaufschlagt werden. Andererseits ist bspw. auch ein Druckbeaufschlagen während der Temperatureinbringung möglich. Es ist bevorzugt, dass das Druckbeaufschlagen vor dem Verbinden der Polsterschichten mit der Sattelschale erfolgt, wobei jedoch auch eine gleichzeitige Durchführung, bspw. ein Verbinden der Sattelschale mit den mehreren Polsterschichten durch das Druckbeaufschlagen möglich ist. Insbesondere erfolgt durch das Druckbeaufschlagen der erwärmten Polsterschichten ein thermisches Umformen der Polsterschichten. Beim thermischen Umformen erfolgt insbesondere ein Verdichten der zu verbindenden Polsterschichten. Möglich ist es bspw., dass es beim thermischen Umformen zu einer Änderung der Materialeigenschaften der Polsterschichten, bspw. der Dämpfungseigenschaften, der Härte, der Steifigkeit, der Festigkeit und/oder der Rebound-Eigenschaft kommt. Zusätzlich oder alternativ erfolgt durch das Druckbeaufschlagen der erwärmten Polsterschichten ein thermisches Fügen, bevorzugt Laminieren, bspw. Verbacken, der Polsterschichten. Das Druckbeaufschlagen erfolgt insbesondere mittels einer Presse, wobei die Presse zum Abkühlen der Polsterschichten vorzugsweise gekühlt ist. Das Verbinden der Polsterschichten mittels Temperatureinbringung und/oder Druckbeaufschlagen entspricht insbesondere einem Laminieren der Polsterschichten.

Es ist bevorzugt, dass die mehreren Polsterschichten, insbesondere alle Polsterschichten, beim Druckbeaufschlagen in eine Form des herzustellenden Sattelpolsters und/oder in eine komplementäre Form zu einer mit den Polsterschichten zu verbindenden Sattelschale geformt werden. Bei der komplementären Form handelt es sich insbesondere um eine Negativform der Sattelschale.

Vorzugsweise weist das Verfahren den weiteren Schritt des Abtrennens eines oder mehrere Überstände, insbesondere Kanten, der miteinander verbundene Polsterschichten auf. Das Abtrennen erfolgt insbesondere nach der Temperatureinbringung und/oder nach dem Umformen. Bevorzugt ist es, dass das Abtrennen derart erfolgt, dass die miteinander verbundenen Polsterschichten nach dem Abtrennen des einen oder mehreren Überständen die Form des herzustellenden Sattelpolsters aufweist. Bei dem Abtrennen handelt es sich insbesondere um ein Schneiden und/oder Stanzen. Das Abtrennen erfolgt vorzugsweise vor, nach und/oder während der Temperatureinbringung und/oder nach dem Druckbeaufschlagen. Bevorzugt ist es, dass die Form eine Schneidekante zum Abtrennen des einen oder der mehreren Überstände aufweist.

Vorzugsweise weist das Verfahren den weiteren Schritt des, bspw. händischen, Beziehens der miteinander verbundenen Polsterschichten mit einem Überzug, z. B. einem Bezugsstoff auf. Das Beziehen erfolgt insbesondere nach der Temperatureinbringung und/oder nach dem Umformen und/oder nach dem Abtrennen des einen oder der mehreren Überstände.

Insbesondere weist das Verfahren den weiteren Schritt des Entformens der miteinander verbundenen Polsterschichten aus der Form auf. Das Entformen erfolgt insbesondere nach der Temperatureinbringung und/oder nach dem Umformen und/oder nach dem Abtrennen des einen oder der mehreren Überstände. Das Entformen kann vorzugsweise nach oder vor dem Beziehen der Polsterschichten mit dem Überzug erfolgen.

Vorzugsweise weist das Verfahren den weiteren Schritt des Beschichtens, insbesondere Lackierens, der miteinander verbundenen Polsterschichten mit Beschichtungsmittel auf. Das Beschichten erfolgt insbesondere nach der Temperatureinbringung und/oder nach dem Umformen und/oder nach dem Abtrennen des einen oder der mehreren Überstände. Vorzugsweise erfolgt das Beschichten nach oder vor dem Entformen. Das Beschichten kann vorzugsweise nach oder vor dem Beziehen der Polsterschichten mit dem Überzug erfolgen. Insbesondere ist es möglich, dass nach einem Beschichten die miteinander verbundenen Polsterschichten bezugsstofffrei bleiben. Das Beschichtungsmittel ist insbesondere ausgeführt eine verbesserte Haltbarkeit und/oder Witterungsbeständigkeit und/oder Dämpfungseigenschaften und/oder Abriebfestigkeit und/oder optimierte Oberflächenstruktur umzusetzen.

Es ist bevorzugt, dass die Form einer Negativform des Sattelpolsters des herzustellenden Fahrradsattels entspricht. Insbesondere entsprechen die Innenmaße der Form den Außenmaßen des Sattelpolsters des herzustellenden Fahrradsattels. Bei der Form handelt es sich bspw. um eine Gussform.

Es ist bevorzugt, dass sich die Dicke mehrere oder aller der mehreren Polsterschichten, insbesondere der Polsterschichten unterscheiden. Vorzugsweise unterscheiden sich die Dicken mehrere oder alle Polsterschichten um mindestens 1 % bis max. 500 %. Insbesondere unterscheiden sich die Dicken mehrere oder alle Polsterschichten um max. 20 %, bevorzugt max. 5 % und besonders bevorzugt um max. 1 % unterscheidet. Andererseits ist es insbesondere möglich, dass sich mehrere oder alle Polsterschichten eine identische Dicke aufweisen. Bei der Dicke handelt es sich insbesondere um eine Wandstärke und/oder eine Höhe der Polsterschichten. Vorzugsweise weisen alle Polsterschichten eine entsprechende Dicke auf. Andererseits ist es insbesondere möglich, dass übereinander angeordnete und/oder nebeneinander angeordnete, insbesondere direkt miteinander verbundene, Polsterschichten eine identische Dicke oder eine sich um max. 20 %, bevorzugt max. 5 % und besonders bevorzugt um max. 1 % unterscheidende Dicke zueinander aufweisen. Die Polsterschichten weisen insbesondere vor und/oder nach dem Verbinden, insbesondere Thermoumformen, eine entsprechende Dicke auf.

Es ist bevorzugt, dass die einzulegenden Polsterschichten aus einem oder mehreren Kunststoffhalbzeugen ausgetrennt, insbesondere ausgestanzt werden. Insbesondere weist das Verfahren den Schritt des Austrennens, insbesondere Ausstanzens der einzulegenden Polsterschichten aus einem oder mehreren Kunststoffhalbzeugen auf, wobei der Schritt des Austrennens vor dem Einlegen der Polsterschichten in die Form erfolgt.

Es ist bevorzugt, dass es sich bei dem mindestens einen Kunststoffhalbzeug um eine EVA-Platte, einen EVA-Block und/oder eine EVA-Bahn handelt.

Es ist bevorzugt, dass die Polsterschichten beim Einlegen in die Form die gleichen Materialeigenschaften, insbesondere die gleiche Dichte, wie das eine oder die mehreren Kunststoffhalbzeuge aufweisen, und/oder dass die Polsterschichten beim Einlegen in die Form die gleichen Maße aufweisen wie nach dem Austrennen aus dem einen oder den mehreren Kunststoffhalbzeugen. Vorzugsweise sind die einzulegenden Polsterschichten, insbesondere nach dem Schritt des Austrennens aus dem einem oder mehreren Kunststoffhalbzeugen und/oder vor dem Schritt des Einlegens in die Form nicht weiter umgeformt und/oder trennend bearbeitet, bspw. gefräst.

Der erfindungsgemäße Fahrradsattel ist insbesondere mittels des erfindungsgemäßen Verfahrens hergestellt. Der Fahrradsattel weist eine Sattelschale, ein mit einer Unterseite der Sattelschale verbundenes Sattelgestell, und ein mit einer Oberseite der Sattelschale verbundenes Sattelpolster auf. Das Sattelpolster weist mehrere, insbesondere direkt, miteinander laminierte, bspw. verschmolzene, Polsterschichten auf, wobei die Polsterschichten EVA und/oder Zellkautschuk aufweisen. Der Fahrradsattel, vorzugsweise das Sattelpolster ist insbesondere bezugs- und/oder beschichtungsfrei, weist somit keinen Bezug und/oder keine Beschichtung auf.

Es ist bevorzugt, dass mindestens eine Polsterschicht in einem Sitzbereich des Fahrradsattels eine größere Härte und/oder höhere Dämpfungseigenschaften und/oder eine höhere Steifigkeit und/oder eine größere Festigkeit aufweist als die Polsterschicht in einem Zentrumsbereich und/oder in einem Nasenbereich.

Es ist bevorzugt, dass die mehreren Polsterschichten nebeneinander und/oder übereinander angeordnet sind.

Der Fahrradsattel weist insbesondere eines oder mehrere Merkmale des im Rahmen des erfindungsgemäßen Verfahrens beschriebenen Merkmale auf.

Nachfolgend wird die Erfindung anhand bevorzugter Ausführungsformen unter Bezugnahme auf die anliegenden Zeichnungen näher erläutert.

Es zeigen:

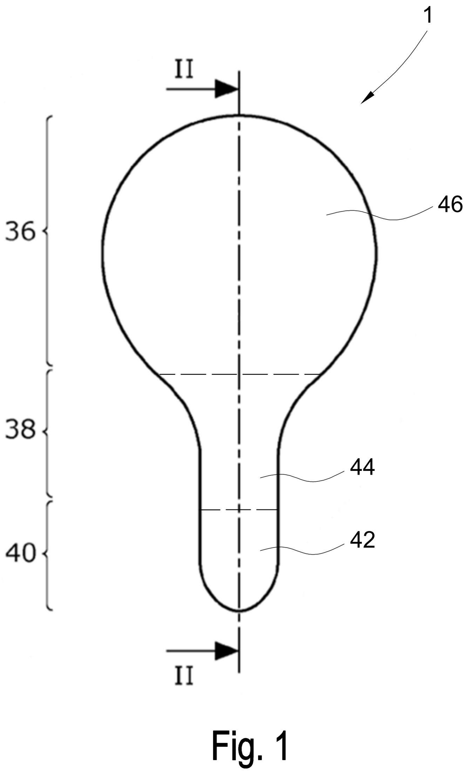

- Fig. 1: eine schematische Draufsicht auf eine bevorzugte Ausführungsform eines erfindungsgemäßen Fahrradsattels, und
- Fig. 2: eine schematische Schnittansicht entlang der Linie II-II in Fig. 1.

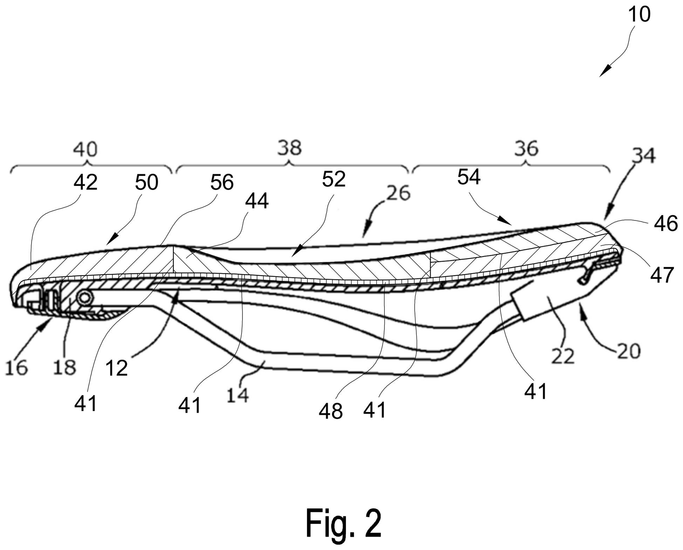

Der dargestellte Fahrradsattel 10 weist eine Sattelschale 12 auf. Mit einer Unterseite der Sattelschale 12 ist ein Sattelgestell 14 verbunden. Hierbei ist das Sattelgestell 14 insbesondere durch zwei Metallstreben ausgebildet, von denen in der Schnittansicht (Fig. 2) die hintere Strebe sichtbar ist. Im Bereich einer Sattelspitze 16 sind die beiden Streben in einem Ansatz 18 der Sattelschale 12 fixiert. Im Bereich einer Rückseite 20 des Sattels sind die beiden Streben des Gestells 14 jeweils getrennt voneinander in einem Ansatz 22 der Sattelschale 12 fixiert.

Auf einer Oberseite der Sattelschale 12 ist ein Sattelpolster 26 angeordnet, wobei das Sattelpolster 26 insbesondere direkt mit der Sattelschale 12 verbunden ist.

Das Sattelpolster 26 weist mehrere Polsterschichten 42, 44, 46, 47, 48 auf, besteht insbesondere daraus. Die Polsterschichten 42, 44, 46, 47, 48 weisen insbesondere EVA (Ethylenvinylacetat) und/oder Zellkautschuk auf, bestehen vorzugsweise daraus.

Der Abschnitt der Polsterschicht 48, der sich in einem Nasenbereich 40 des Fahrradsattels 10 befindet, sowie die Polsterschicht 42 bilden gemeinsam das Nasenpolster 50 aus. Der Abschnitt der Polsterschicht 48, der sich in einem Zentrumsbereich 38 des Fahrradsattels 10 befindet, sowie die Polsterschicht 44 bilden gemeinsam das Zentrumspolster 52 aus. Der Abschnitt der Polsterschicht 48, der sich in einem Sitzbereich 36 des Fahrradsattels 10 befindet, sowie die Polsterschichten 46 und 47 bilden gemeinsam das Sitzpolster 54 aus. Nasenpolster 50, Zentrumspolster 52 und Sitzpolster 54 bilden gemeinsam das Sattelpolster 26 aus.

Die Polsterschicht 48 ist mit einer Unterseite flächig und direkt mit einer Oberseite der Sattelschale 12 verbunden. Ferner ist eine Oberseite der Polsterschicht 48 flächig und direkt mit Unterseiten der Polsterschichten 42, 44, 47 verbunden. Eine Oberseite der Polsterschicht 47 ist flächig und direkt mit einer Unterseite der Polsterschicht 46 verbunden. Die Polsterschichten 46, 47, 48 sowie die Polsterschichten 44, 48 sowie die Polsterschichten 42, 48 sind jeweils übereinander angeordnet. Die Polsterschicht 42 sowie die Polsterschicht 44 sind nebeneinander angeordnet und die Polsterschichten 46, 47 sind zur Polsterschicht 42 und zur Polsterschicht 44 nebeneinander angeordnet.

Die Polsterschichten 42, 44, 46, 47, 48 sind insbesondere stoffschlüssig miteinander verbunden, vorzugsweise laminiert, bspw. verbacken und/oder verschmolzen. Die, insbesondere stoffschlüssigen, Verbindungen 41 zwischen den Polsterschichten 42, 44, 46, 47, 48 erfolgten vorzugsweise durch eine Temperatureinbringung und/oder ein Druckbeaufschlagen. Ferner ist es bevorzugt, dass die Polsterschichten 42, 44, 46, 47, 48 durch Temperatureinbringung und/oder Druckbeaufschlagen in die Form des Sattelpolsters 26 geformt wurden.

Es ist bevorzugt, dass das Sitzpolster 54 und somit insbesondere der Sitzbereich 36 des Fahrradsattels 10, höhere Dämpfungseigenschaften und/oder ein höheres Rebound-Verhalten und/oder eine größere Härte und/oder eine höhere Steifigkeit und/oder eine größere Festigkeit aufweist als das Zentrumspolster 52 und/oder das Nasenpolster 50. Die unterschiedlichen Dämpfungseigenschaften ergeben sich insbesondere aus der Kombination und/oder der Anzahl der Polsterschichten 46, 47, 48 des Sitzpolster im Vergleich zu den Polsterschichten 44, 48 des Zentrumspolsters 52 und den Polsterschichten 42, 48 des Nasenpolster 50.

Möglich ist es bspw., dass das Sattelpolster 26 mit einem Bezug 56, bspw. Bezugsstoff, bezogen ist. Alternativ ist jedoch insbesondere auch eine Ausführung des Sattelpolsters 26 ohne Bezug 56 möglich.

## Patentansprüche

1. Verfahren zur Herstellung eines Fahrradsattels (10), mit den Schritten:
- Bereitstellen einer Form,
- Einlegen mehrere Polsterschichten (42, 44, 46, 47, 48) in die Form, wobei die Polsterschichten (42, 44, 46, 47, 48) unterschiedliche Materialeigenschaften aufweisen,
- Verbinden, bspw. Laminieren, der mehreren Polsterschichten (42, 44, 46, 47, 48) zum Ausbilden eines Sattelpolsters (26) des herzustellenden Fahrradsattels.

2. Verfahren nach Anspruch 1, **dadurch gekennzeichnet, dass** die Polsterschichten (42, 44, 46, 47, 48) EVA und/oder Zellkautschuk aufweisen.

3. Verfahren nach Anspruch 1 oder 2, **dadurch gekennzeichnet, dass** die mehrere Polsterschichten (42, 44, 46, 47, 48) nebeneinander und/oder übereinander angeordnet werden.

4. Verfahren nach einem der Ansprüche 1-3, **dadurch gekennzeichnet, dass** die mehreren Polsterschichten (42, 44, 46, 47, 48) unterschiedliche Dämpfungseigenschaften aufweisen.

5. Verfahren nach Anspruch 4, **dadurch gekennzeichnet, dass** mindestens eine in einem Sitzbereich (36) des herzustellenden Fahrradsattels (10) vorgesehenes Polsterschicht (46, 47, 48) höhere Dämpfungseigenschaften und/oder eine größere Härte aufweist als Polsterschichten (42, 44, 48) in anderen Bereichen, insbesondere in einem Zentrumsbereich (38) und/oder in einem Nasenbereich (40) des Fahrradsattels (10).

6. Verfahren nach einem der Ansprüche 1-5, **dadurch gekennzeichnet, dass** der Schritt des Einlegens der mehreren Polsterschichten (42, 44, 46, 47, 48) aufweist:
- Einlegen mehrere Polsterschichten (46, 47, 48) in einen Sitzbereich (36) des herzustellenden Fahrradsattels zur Ausbildung eines Sitzpolsters (54), und/oder
- Einlegen mehrere Polsterschichten (42, 48) in einen Zentrumsbereich (38) des herzustellenden Fahrradsattels zur Ausbildung eines Zentrumspolsters (52), und/oder
- Einlegen mehrere Polsterschichten (44, 48) in einen Nasenbereich (40) des herzustellenden Fahrradsattels zur Ausbildung eines Nasenpolsters (50).

7. Verfahren nach Anspruch 6, **dadurch gekennzeichnet, dass** mindestens zwei aus Sitzpolster (54), Zentrumspolster (52) und Nasenpolster (50) unterschiedliche Dämpfungseigenschaften aufweisen, wobei bevorzugt das Sitzpolster (54) höhere Dämpfungseigenschaften und/oder eine größere Härte aufweist.

8. Verfahren nach einem der Ansprüche 1-7, **dadurch gekennzeichnet, dass** das Verfahren den Schritt des, insbesondere stoffschlüssigen, Verbindens einer Sattelschale (12) des herzustellenden Fahrradsattels mit den mehreren Polsterschichten (42, 44, 46, 47, 48) aufweist.

9. Verfahren nach einem der Ansprüche 1-8, **dadurch gekennzeichnet, dass** das Verfahren den Schritt der Temperatureinbringung in die Polsterschichten (42, 44, 46, 47, 48), insbesondere zum Verbinden und/oder zu einem Umformen der Polsterschichten (42, 44, 46, 47, 48), aufweist.

10. Verfahren nach einem der Ansprüche 1-9, **dadurch gekennzeichnet, dass** das Verfahren den Schritt des Druckbeaufschlagens der Polsterschichten (42, 44, 46, 47, 48), insbesondere zum Verbinden und/oder zu einem Umformen der Polsterschichten (42, 44, 46, 47, 48), aufweist, wobei es bevorzugt ist:
dass die Polsterschichten (42, 44, 46, 47, 48) beim Druckbeaufschlagen in eine Form des herzustellenden Sattelpolsters, vorzugsweise in eine komplementäre Form zu einer mit den Polsterschichten (42, 44, 46, 47, 48) zu verbindenden Sattelschale (12), umgeformt werden.

11. Verfahren nach einem der Ansprüche 1 bis 10, **dadurch gekennzeichnet, dass** die Form einer Negativform des Sattelpolsters (26) des herzustellenden Fahrradsattels entspricht.

12. Verfahren nach einem der Ansprüche 1 bis 11, **dadurch gekennzeichnet, dass** sich die Dicke mehrere oder aller der Polsterschichten (42, 44, 46, 47, 48) unterscheiden, z. B. um max. 20 %, bevorzugt max. 5 % und besonders bevorzugt um max. 1 %.

13. Verfahren nach einem der Ansprüche 1 bis 12, **dadurch gekennzeichnet, dass** die einzulegenden Polsterschichten aus einem oder mehreren Kunststoffhalbzeugen ausgetrennt, insbesondere ausgestanzt werden, wobei es bevorzugt ist:
dass es sich bei dem mindestens einen Kunststoffhalbzeug um eine EVA-Platte, einen EVA-Block und/oder eine EVA-Bahn handelt.

14. Verfahren nach einem der Ansprüche 1 bis 13, **dadurch gekennzeichnet, dass** die Polsterschichten (42, 44, 46, 47, 48) beim Einlegen in die Form die gleichen Materialeigenschaften, insbesondere die gleiche Dichte, wie das eine oder die mehreren Kunststoffhalbzeuge aufweisen, und/oder dass die Polsterschichten (42, 44, 46, 47, 48) beim Einlegen in die Form die gleichen Maße aufweisen wie nach dem Austrennen aus dem einen oder den mehreren Kunststoffhalbzeugen.

15. Fahrradsattel (10), insbesondere hergestellt mit einem Verfahren nach einem der Ansprüche 1 bis 14, mit
einer Sattelschale (12),
einem mit einer Unterseite der Sattelschale (12) verbundenen Sattelgestell, und
einem mit einer Oberseite der Sattelschale (12) verbundenen Sattelpolster (26),
wobei das Sattelpolster (26) mehrere miteinander laminierte Polsterschichten (42, 44, 46, 47, 48) aufweist, wobei die Polsterschichten (42, 44, 46, 47, 48) EVA und/oder Zellkautschuk aufweisen, wobei es bevorzugt ist:
dass mindestens eine Polsterschicht (46, 47, 48) in einem Sitzbereich (36) des Fahrradsattels (10) eine größere Härte und/oder höhere Dämpfungseigenschaften aufweist als die Polsterschicht (42, 44, 48) in einem Zentrumsbereich (38) und/oder in einem Nasenbereich (40), und/oder
dass die mehrere Polsterschichten (42, 44, 46, 47, 48) nebeneinander und/oder übereinander angeordnet sind.
